# EUROPEAN PATENT SPECIFICATION

(11) **EP 3 052 764 B1**
(45) Date of publication and mention of the grant of the patent: **10.04.2024**
(21) Application number: 14850260.2
(22) Date of filing: 22.09.2014
(51) Int. Cl.: F01D 9/04

(54) **MID-TURBINE FRAME WIHT A PLURALITY OF VANES.**
TURBINENZWISCHENGEHÄUSE MIT MEHRERE LEITSCHAUFELN.
MODULE INTER-TURBINES AVEC UNE PLURALITÉ D'AUBES STATORIQUES.

(30) Priority: 03.10.2013 US 201361886099 P
(43) Date of publication of application: 10.08.2016
(73) Proprietor: RTX Corporation, Farmington, CT 06032 (US)
(72) Inventor: OLS, John T., Northborough, Massachusetts 01532 (US); ALLEN, Richard N., West Hartford, Connecticut 06107 (US); PORTER, Steven D., Wethersfield, Connecticut 06109 (US); SANCHEZ, Paul K., Wellington, FL 33414 (US)
(74) Representative: Dehns
(86) International application number: PCT/US2014/056709
(87) International publication number: WO 2015/050729

(56) References cited:
- EP-A2- 1 936 117
- EP-A2- 2 423 438
- WO-A1-2012/158070
- US-A1- 2006 013 685
- US-A1- 2007 122 275
- US-A1- 2011 223 036
- US-A1- 2011 283 711
- US-A1- 2012 148 383
- US-A1- 2013 170 994
- US-A1- 2013 224 010
- US-A1- 2013 224 010
- US-B2- 7 066 713

## Description

### BACKGROUND OF THE INVENTION

This application relates to a mid turbine frame with a plurality of vanes for use as a static element in a gas turbine engine, wherein a platform of the vanes is provided with a rib.

Gas turbine engines are known, and typically include a compressor delivering air into a combustion section where it is mixed with fuel and ignited. Products of this combustion pass downstream over turbine rotors, driving them to rotate. Static vanes are often positioned between adjacent turbine rotors and serve to redirect flow such that it is in a desired condition when it reaches a downstream turbine rotor.

One such location is a mid-turbine frame positioned between a higher pressure turbine rotor and a lower pressure turbine rotor. A mid-turbine frame typically includes vanes having a radially outer platform and a radially inner platform and an airfoil extending between the two platforms. The vanes are subject to a number of stresses, and designing the vanes to address those stresses is challenging.

US 2012/148383 A1 discloses a gas turbine vane with a cooling channel end turn structure.

US 2006/013685 A1 discloses a vane platform rail configuration for reduced airfoil stress.

US 2007/122275 A1 discloses methods and apparatus for assembling turbine nozzles.

US 2013/224010 A1 discloses mid-turbine frame according to the preamble of claim 1.

### SUMMARY OF THE INVENTION

From a first aspect the invention provides a mid-turbine frame as claimed in claim 1.

Features of embodiments of the invention are set forth in the following description.

These and other features may be best understood from the following drawings and specification, the following which is a brief description.

### BRIEF DESCRIPTION OF THE DRAWINGS

Figure 1 schematically shows a gas turbine engine.
Figure 2 shows a mid-turbine frame.
Figure 3A shows a first arrangement, falling outside the wording of the claims.
Figure 3B shows a potential alternative arrangement, falling outside the scope of the claims, but taken generally along line B-B of Figure 3A.
Figure 4A is a cross-section along line B-B as shown in Figure 3A.
Figure 4B is a detail of a portion of Figure 4A.
Figure 4C shows an alternative arrangement.
Figure 5 shows an embodiment according to the present invention.

### DETAILED DESCRIPTION

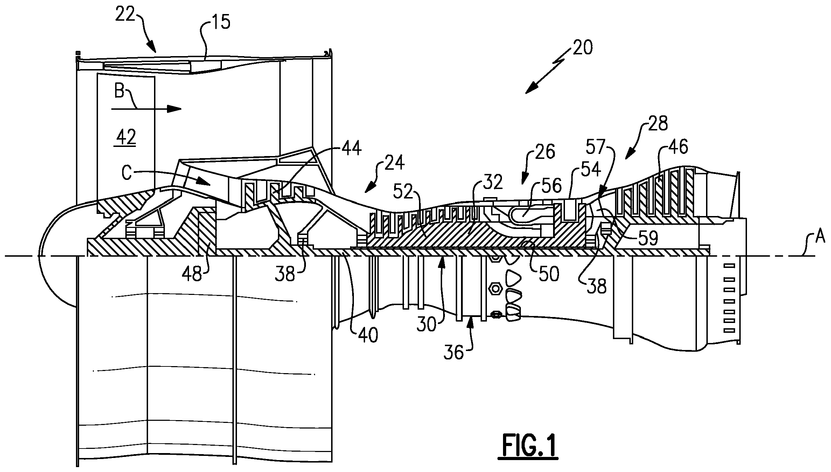

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (low) pressure compressor 44 and a first (low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (high) pressure compressor 52 and second (high) pressure turbine 54. The high pressure turbine 54 is upstream of the low pressure turbine 46. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350 m/s).

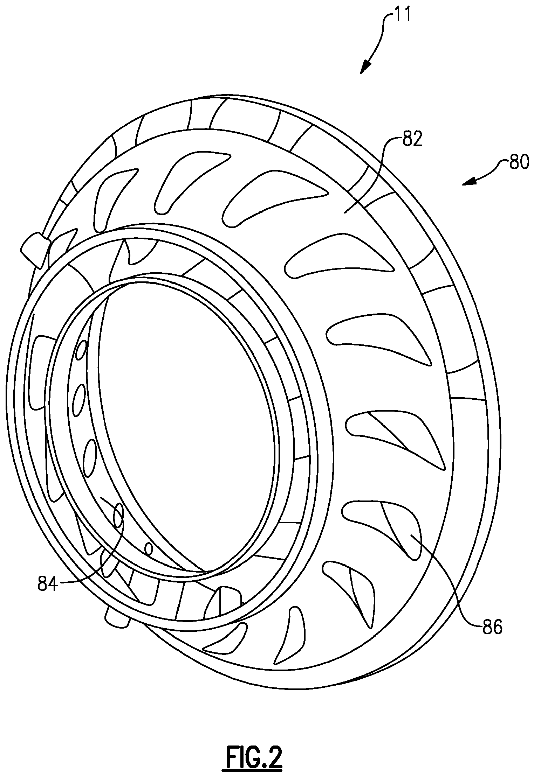

Figure 2 shows a mid-turbine frame 11 formed of plural vanes 80, which may be utilized in the engine 20 at the location of mid-turbine frame 57 and may support a bearing 38. While a mid-turbine frame 11 having vanes 80 is shown incorporating details of this application, it should be understood that the features of this application can extend to any other location for turbine vanes. The application may also extend to compressor vanes. The vane 80 has a radially outer platform 82, and a radially inner platform 84. A plurality of airfoils 86 (airfoils 86 can be positioned like airfoils 59 as seen in Figure 1), which are hollow, extend between the platforms 82 and 84.

A vane 80 could be defined as one airfoil 86, and a portion of the outer platform 82, and the inner platform 84. While this application discloses vanes connected together to surround a circumference, its teachings could extend to a single vane, and of course to a plurality of vanes connected together.

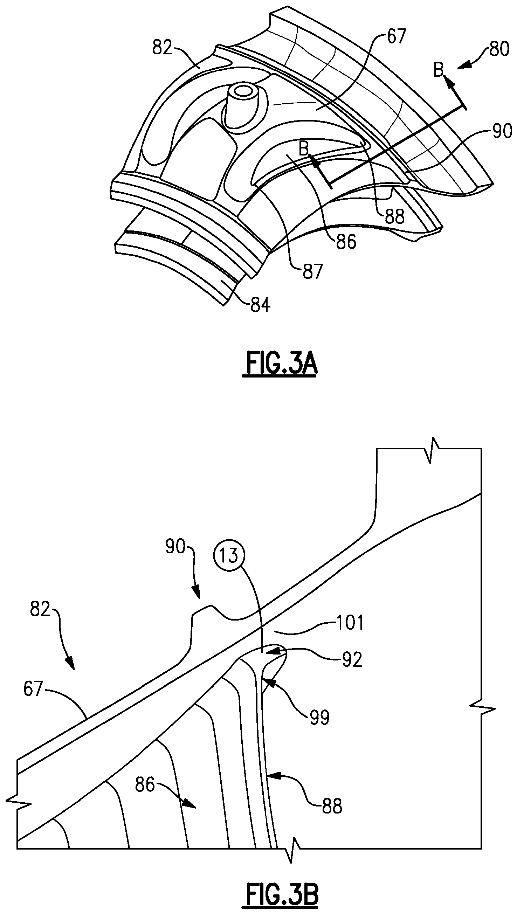

As shown in Figure 3A, a first arrangement mid turbine frame 80 has the outer platform 82 including a plurality of airfoils 86 extending to the inner platform 84. An airfoil leading edge 87 and a trailing edge 88 of the airfoil 86 are defined at the outer surface 67 of the outer platform 82.

There are particular stresses at a location just beyond the trailing edge 88. The airfoils have a "bow" where they meet end walls, such as point 13 in Figure 3B. There is a potential for high stress, in particular at the trailing edge and point 13. Thus, a rib 90 is formed adjacent the trailing edge 88, and in the Figure 3A arrangement, just spaced away from the trailing edge in a direction away from the leading edge 87. As can be appreciated, the rib 90 is circumferentially continuous and extends circumferentially across at least a plurality of airfoils 86. The rib 90 provides a thermal mass and compressive stress to the region, thus assisting the mid turbine frame 80 in better adapting to the stresses and challenges mentioned above. In addition, the rib 90 can increase castability by assisting the flow of molten material into a trailing edge area of airfoil 86. The rib 90 is thicker than surrounding nominal wall portions.

As shown in Figure 3B, in an arrangement falling outside the scope of the claims, the rib 90 may be positioned axially forward of a fillet 92 which merges a wall 99 of the airfoil 86 into the radially inner surface 101 of the outer platform 82. While the rib 90 may be spaced away from the trailing edge 88 at outer face 67 of the outer platform 82, it is axially aligned with the inner fillet 92.

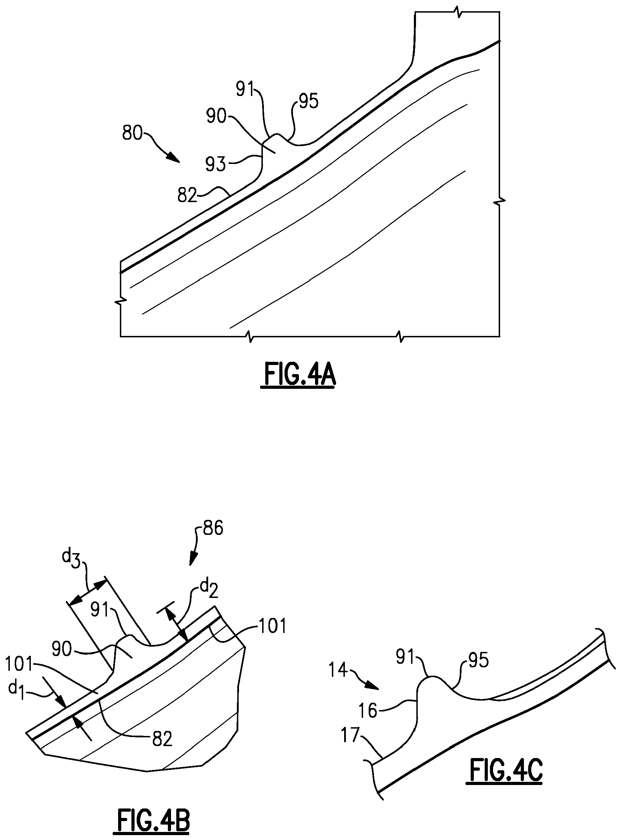

Figure 4A is a cross-sectional view along the line 4-4 of Figure 4A. As shown, the rib 90 extends to a radially outer face 91. An axially rear or trailing side 95 of the rib 90 extends generally more perpendicularly than does a leading edge side 93. The leading edge side 93 increases to the face 91 more gradually than does the trailing side 95.

Figure 4B shows a nominal thickness d1 of the outer platform 82 wall. In one embodiment, the nominal wall thickness may be .080 in (.203 cm). Further, a height d2 from the inner surface 101 to the top face 91 may be .350 in (.889 cm) as cast. This thickness can be machined away to .250 in (.635 cm) in in the final mid turbine frame 80. A width d3 of the rib may be .200 in (.508 cm). A ratio of d1 to d2 is between 1.1 and 6.0, and a ratio of d1 to d3 was between 1.1 and 6.0.

Figure 4C shows an alternative rib 14 wherein the upstream or leading edge side 16 is generally vertical to engine axis.

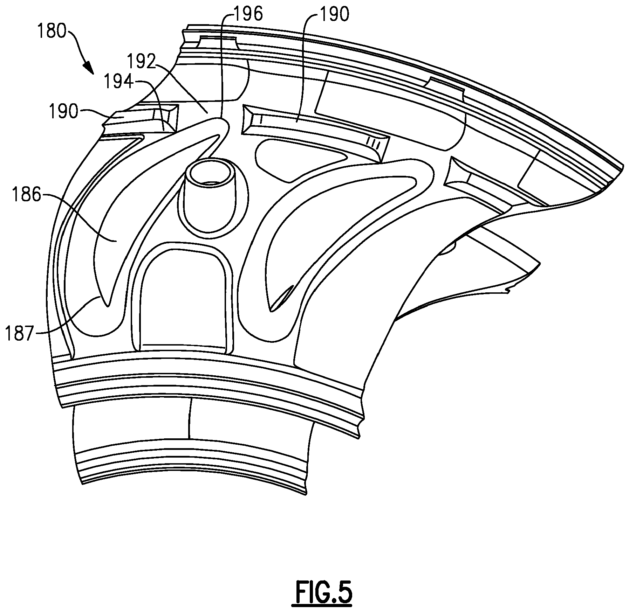

Figure 5 shows an embodiment 180, according to the present invention, wherein the ribs 190 are formed of discrete rib segments. There are circumferentially spaced portions 192 intermediate the ribs 190 which are not at the same thickness or height. As shown, the airfoils 186 extend to a trailing edge 196. An axially forward end 194 of ribs 190 is closer to the leading edge 187 than is the trailing edge 196. The embodiment 180 may reduce material, and thus part weight. The dimensions and ratios as mentioned above would also apply to this embodiment.

Rather than one large rib, it is also possible to have two smaller ribs.

Although embodiments have been disclosed, a worker of ordinary skill in the art would recognize that certain modifications will come up in a scope of this invention. For that reason, the following claims should be studied to determine the true scope and content.

## Claims

1. A mid-turbine frame (11; 57) comprising a plurality of vanes (80), each vane (80) comprising:
an airfoil (59; 186) extending between a leading edge (187) and a trailing edge (196) and being generally hollow;
a radially outer platform (82) and a radially inner platform (84); and
a rib (14; 190) on said radially outer platform (82), said rib (14; 190) being adjacent said trailing edge (196) of said airfoil (59; 186), wherein said rib (14; 190) is on an outer surface of said outer platform (82), said rib (14; 190) is spaced beyond said trailing edge (196) relative to said leading edge (187), said airfoil (59; 186) has a trailing edge (196) at an inner surface of said outer platform (82), and said rib (190) is aligned with a fillet merging into said trailing edge (196) at said inner surface,
wherein a width (d₃) of said rib (14; 190) is defined in a direction between said leading edge (187) and said trailing edge (196), and a nominal wall thickness (d₁) of the inner and outer surfaces of said outer platform (82) is defined, and a ratio of said nominal wall thickness (d₁) to said width (d₃) is between 1.1 and 6.0,
wherein said rib (14; 190) has a height (d₂) extending radially outwardly that is greater than surrounding nominal wall portions,
wherein said height (d₂) of said rib (14; 190) is defined from the inner surface of said outer platform (82) to a radially outermost face of said rib (14; 190), and the nominal wall thickness (d₁) of said outer platform (82) is defined between said inner surface and the outer surface of said outer platform (82), and a ratio of said nominal wall thickness (d₁) to said height (d₂) is between 1.1 and 6.0,
wherein said rib (14; 190) is circumferentially discontinuous, and there are gaps (192) between rib portions (14; 190).

## Patentansprüche

1. Turbinenzwischengehäuse (11; 57), umfassend eine Vielzahl von Leitschaufeln (80), wobei jede Leitschaufel (80) Folgendes umfasst:
ein Schaufelprofil (59; 186), das sich zwischen einer Vorderkante (187) und einer Hinterkante (196) erstreckt und im Allgemeinen hohl ist;
eine radial äußere Plattform (82) und eine radial innere Plattform (84); und
eine Rippe (14; 190) auf der radial äußeren Plattform (82), wobei die Rippe (14; 190) an die Hinterkante (196) des Schaufelprofils (59; 186) angrenzt, wobei die Rippe (14; 190) sich an einer Außenfläche der äußeren Plattform (82) befindet, die Rippe (14; 190) über die Hinterkante (196) hinaus relativ zur Vorderkante (187) beabstandet ist, das Schaufelprofil (59; 186) eine Hinterkante (196) an einer Innenfläche der äußeren Plattform (82) aufweist und die Rippe (190) an einer Kehle ausgerichtet ist, die in die Hinterkante (196) an der Innenfläche übergeht,
wobei eine Breite (d₃) der Rippe (14; 190) in einer Richtung zwischen der Vorderkante (187) und der Hinterkante (196) definiert ist und eine nominale Wandstärke (d₁) der Innen- und Außenfläche der äußeren Plattform (82) definiert ist und ein Verhältnis der nominalen Wandstärke (d₁) zur Breite (d₃) zwischen 1,1 und 6,0 liegt,
wobei die Rippe (14; 190) eine sich radial nach außen erstreckende Höhe (d₂) aufweist, die größer ist als die umgebenden nominale Wandabschnitte,
wobei die Höhe (d₂) der Rippe (14; 190) von der Innenfläche der äußeren Plattform (82) bis zu einer radial äußersten Fläche der Rippe (14; 190) definiert ist und die nominale Wandstärke (d₁) der äußeren Plattform (82) zwischen der Innenfläche und der Außenfläche der äußeren Plattform (82) definiert ist und ein Verhältnis der nominalen Wandstärke (d₁) zur Höhe (d₂) zwischen 1,1 und 6,0 liegt,
wobei die Rippe (14; 190) umlaufend unterbrochen ist und zwischen Abschnitten der Rippe (14; 190) Lücken (192) vorhanden sind.

## Revendications

1. Module inter-turbines (11 ; 57) comprenant une pluralité d'aubes (80), chaque aube (80) comprenant :
un profil aérodynamique (59 ; 186) s'étendant entre un bord d'attaque (187) et un bord de fuite (196) et étant généralement creux ;
une plateforme radialement externe (82) et une plateforme radialement interne (84) ; et
une nervure (14 ; 190) sur ladite plateforme radialement externe (82), ladite nervure (14 ; 190) étant adjacente audit bord de fuite (196) dudit profil aérodynamique (59 ; 186), dans lequel ladite nervure (14 ; 190) est sur une surface externe de ladite plate-forme externe (82), ladite nervure (14 ; 190) est espacée au-delà dudit bord de fuite (196) par rapport audit bord d'attaque (187), ledit profil aérodynamique (59 ; 186) a un bord de fuite (196) au niveau d'une surface interne de ladite plateforme externe (82), et ladite nervure (190) est alignée avec un flanc de raccordement se fondant dans ledit bord de fuite (196) au niveau de ladite surface interne,
dans lequel une largeur (d₃) de ladite nervure (14 ; 190) est définie dans une direction entre ledit bord d'attaque (187) et ledit bord de fuite (196), et une épaisseur de paroi nominale (d₁) des surfaces interne et externe de ladite plateforme externe (82) est définie, et un rapport de ladite épaisseur de paroi nominale (d₁) à ladite largeur (d₃) est compris entre 1,1 et 6,0, dans lequel ladite nervure (14 ; 190) a une hauteur (d₂) s'étendant radialement vers l'extérieur qui est supérieure aux parties de paroi nominales environnantes,
dans lequel ladite hauteur (d₂) de ladite nervure (14 ; 190) est définie depuis la surface interne de ladite plateforme externe (82) jusqu'à une face radialement la plus extérieure de ladite nervure (14 ; 190), et l'épaisseur de paroi nominale (d₁) de ladite plateforme externe (82) est définie entre ladite surface interne et la surface externe de ladite plate-forme externe (82), et un rapport de ladite épaisseur de paroi nominale (d₁) à ladite hauteur (d₂) est compris entre 1,1 et 6,0,
dans lequel ladite nervure (14 ; 190) est circonférentiellement discontinue, et il y a des espaces (192) entre les parties de nervure (14 ; 190).
